# EUROPEAN PATENT APPLICATION

(11) **EP 2 538 056 A2**
(43) Date of publication of application: **26.12.2012**
(21) Application number: 12171449.7
(22) Date of filing: 11.06.2012
(51) Int. Cl.: F02C 7/25

(54) **A heat protection assembly**

(30) Priority: 24.06.2011 GB 201110687
(71) Applicant: Rolls-Royce plc, London SW1E 6AT (GB)
(72) Inventor: Groom, Alec R, Bristol, BS5 7SE (GB); Brazil, Philp A, Bristol, BS34 6RL (GB)
(74) Representative: Hill, Matthew Ross

(57) **Abstract**

A heat and/or fire protection assembly (100) for a component (104), the assembly comprising: a plurality of protrusions (110) distributed about a surface of the component, the protrusions protruding with respect to the surface of the component; the protrusions comprising a barrier material (130), the barrier material being arranged and configured to form a first protective layer under the action of heat, the first protective layer being arranged to protect the component from the heat.

## Description

The present disclosure relates to a heat protection assembly and particularly but not exclusively relates to a heat protection assembly for components of a gas turbine engine.

In a gas turbine engine it is desirable to protect various components from excessive heat, eg in the event of an engine fire. This is particularly the case for a jet engine. For example, it may be critical that certain electronic, hydraulic or any other functions are preserved if only for a certain period of time.

Furthermore, gas turbine engines may comprise various flexible components, eg wires, hoses, harnesses, flexible printed circuit boards, pipes etc, which may, for example, conveniently conform to a particular shape within the engine. Such flexible components may require protection in the event of an engine fire.

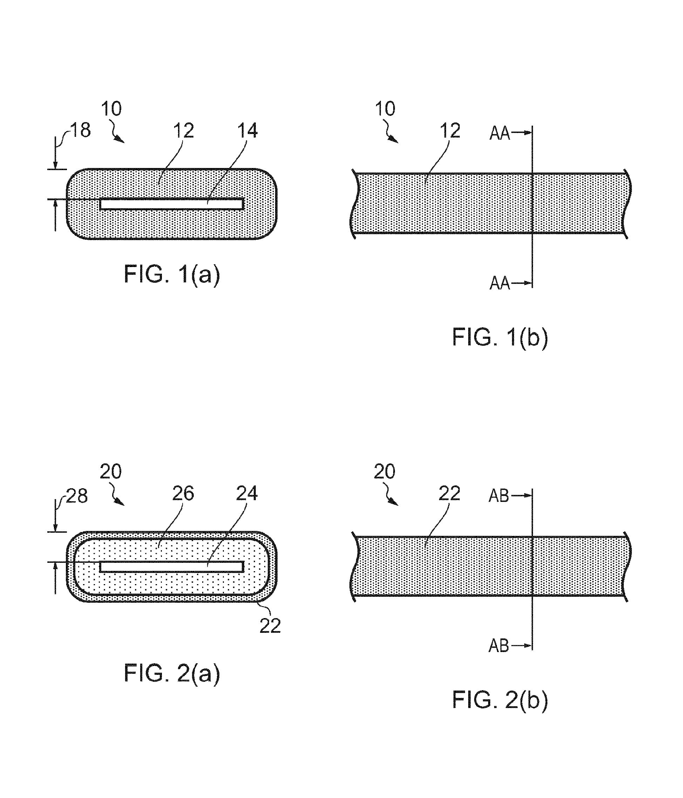

Presently, there are two previously-proposed fire protection systems for flexible printed circuit boards. As shown in Figures 1(a) and 1(b), the first of these systems 10 comprises a homogenous, solid layer 12 of a material such as silicone rubber, which encapsulates a component 14. By contrast, as shown in Figures 2(a) and 2(b), the second of the previously-proposed fire protection systems 20 comprises an inner layer 26 of fibre matting or weave (often ceramic fibre), covered in an outer layer 22 of similar silicone rubber type material. The outer layer 22 may be integral with the inner layer 26.

In either the first or second previously-proposed systems, the silicone (or similar) material may be loaded with other fibres or powders to modify its fire resistance, fluid resistance, flexibility, strength etc. It is also possible to use intumescent paints that are applied as a thin layer. Intumescent paints swell to a thicker layer during a fire, but they are not readily available in a robust, flexible form.

In the first system shown in Figure 1, a relatively thin layer 12 of silicone rubber type coating may resist flame impingement for some time, but it may not provide enough thermal insulation to maintain the component function for several minutes during a fire. Furthermore, if using a proprietary coating such as Fastblock, an initial estimate of the layer thickness 18 required to maintain component function for several minutes gives a layer thickness of approximately 6.35mm (0.25 inches) all around a 1 mm thick component. However, the weight and stiffness of this thick layer considerably reduces the benefits of using a flexible component.

The second previously-proposed system may require a similar thickness 28, but the weight may be reduced by substituting some of the silicone rubber type material for lighter mineral-fibre matting or weave. However, this creates several problems. Firstly, if the protection system is not sealed then the mineral-fibre can soak up fluids adding weight, degrading the component, or creating a considerable fire hazard if the fluids are flammable. This also applies if the protection system is sealed but is susceptible to piercing, slitting etc. Secondly, if the system is sealed then the air contained within the mineral fibre causes the protection to inflate when transported to the relatively low atmospheric pressure of flight altitude. This can cause immediate (bursting) or long term (material degradation) damage. Equally, if the system is sealed then the air contained can also pressurise rapidly as it heats when exposed to fire and this pressure can then rupture the outer layer, resulting in much reduced fire protection.

Furthermore, the mineral-fibre layer of the second previously-proposed system can compress easily which allows the protection to crease and crumple when flexed, possibly resulting in reduced thermal insulation performance. The mineral-fibre may also degrade due to engine vibration, resulting in reduced thermal insulation performance.

The present disclosure therefore seeks to address these issues.

According to an aspect there is provided a heat and/or fire protection assembly or system for a component, the assembly comprising: a plurality of protrusions, eg elongate elements, distributed about a surface of the component, the protrusions protruding with respect to the surface of the component. The protrusions extend to an end, which may be referred to as a distal end. The distal end may be with respect to the component. The protrusions comprise a barrier material. The protrusions are spaced from one another in a first condition such that the assembly is flexible. The barrier material is constructed and arranged to form, in a second condition under the action of heat, a first protective layer, the first protective layer closing the space between at least the ends of the protrusions so as to protect the component from the heat.

According to another aspect there is provided method of protecting a component from heat. The method comprises providing a heat protection assembly comprising a plurality of protrusions distributed about a surface of the component, each protrusion protruding with respect to the surface of the component to a respective end, the protrusions being spaced from one another in a first condition such that the assembly is flexible, the protrusions comprising a barrier material. The method also comprises forming, in a second condition under the action of heat, a first protective layer from the barrier material, the first protective layer closing the space between at least the ends of the protrusions so as to protect the component from the heat.

Aspects of the invention may relate to a heat protection assembly for flexible components, eg wires, hoses, harnesses, flexible printed circuit boards, pipes, which may be part of a gas turbine engine. According to the invention, any heat protection assembly described and/or claimed herein may be combined with a component, for example a flexible component, eg wire, hose, harness, flexible printed circuit board, pipe. Such a flexible component may be part of a gas turbine engine.

The angle of the protrusions with respect to the component permits the barrier material to form the first protective layer, eg by expansion or fusion, in a direction at least partially parallel to the component surface. A thicker and more effective protective layer can thus be achieved. The flexibility of the component may also be maintained at least prior to the activation of the barrier material.

The barrier material may be disposed on a surface, eg sidewalls, of the protrusions. The barrier material may comprise a material adapted to expand under action of heat, eg so as to fill the space between adjacent protrusions and/or to form the first protective layer. The barrier material may comprise an intumescent material.

The barrier material may be disposed on ends of the protrusions. The barrier material may be provided as a membrane, eg a flexible membrane, disposed on ends of the protrusions. The barrier material may be provided as a permeable membrane which may be configured to fuse under the action of heat, eg so as to become impermeable and form the first protective layer. The barrier material may comprise a fibre material, eg weave or fabric.

The barrier material may be provided as flange portions arranged at ends of the protrusions. The flange portions may be configured such that adjacent flange portions come, eg fuse, together under the action of heat, eg so as to form the first protective layer. The flange portions may be integral with the respective protrusions.

The plurality of protrusions may be arranged so as to form a lattice, eg honeycomb, arrangement distributed about the surface of the component.

The assembly may further comprise a second protective layer. The second protective layer may substantially encapsulate the component. The protrusions may be integral with the second protective layer. The second protective layer and/or protrusions may be made from silicone.

The protrusions may be substantially perpendicular to the surface of the component.

The heat protection assembly may be adapted to protect components of a gas turbine engine. For example, the assembly may protect electrical harnesses or cables, flexible or rigid pipes, hoses or printed circuit boards, control or actuation cables or any component that requires fire and/or heat protection. The heat protection assembly may also be applied to any other component whether for a gas turbine or not.

A gas turbine engine may comprise the aforementioned heat protection assembly.

For a better understanding of the present disclosure, and to show more clearly how it may be carried into effect, reference will now be made, by way of example, to the accompanying drawings, in which:
Figure 1 shows a first previously-proposed fire protection system with Figure 1(a) showing a sectional view corresponding to section AA shown in Figure 1(b);
Figure 2 shows a second previously-proposed fire protection system with Figure 2(a) showing a sectional view corresponding to section AB shown in Figure 2(b);
Figure 3 shows a heat protection assembly according to a first example of the present disclosure with Figure 3(b) showing a sectional view corresponding to section AC and Figure 3(c) showing a further sectional view corresponding to section AD, both of which are shown in Figure 3(a);
Figure 4 shows the heat protection assembly according to the first example of the present disclosure after the barrier material, eg intumescent material, has been activated;
Figure 5 shows a heat protection assembly according to a second example of the present disclosure with Figure 5(b) showing a sectional view corresponding to section AE and Figure 5(c) showing a further sectional view corresponding to section AF, both of which are shown in Figure 5(a);
Figure 6 shows a heat protection assembly according to a third example of the present disclosure; and
Figure 7 shows a heat protection assembly according to a fourth example of the present disclosure.

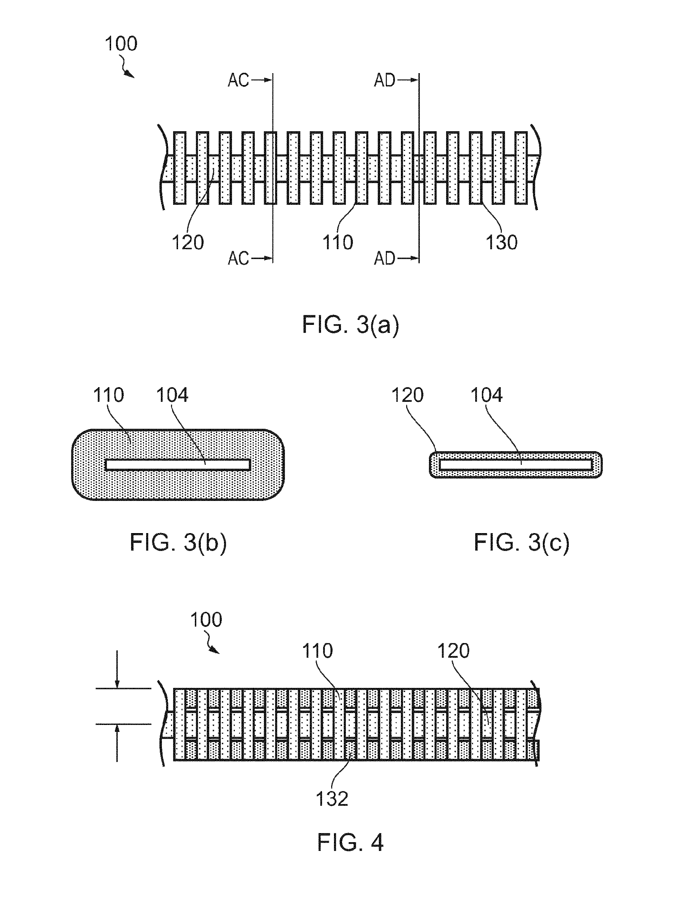

With reference to Figures 3(a) to 3(c) and Figure 4, a heat protection assembly 100, according to a first example of the present disclosure, may comprise a plurality of protrusions, eg elongate elements, 110 protruding with respect to a surface of a flexible (or rigid) component 104. The component 104 may be part of a gas turbine engine. For example, the assembly may protect electrical harnesses or cables, flexible or rigid pipes, hoses or printed circuit boards, control or actuation cables or any component that requires fire and/or heat protection.

The protrusions 110 may be distributed about the surface of the component 104. As shown in Figure 3(c), which depicts a section of a protrusion 110, the protrusions may extend about a perimeter of the component 104. Accordingly, the protrusions 110 may be in the form of ribs. The protrusions 110 may extend about the perimeter of the component 104 in a plane that does not limit the flexure of the component in an intended direction. For example, the protrusions 110 may extend in a plane perpendicular to a bending axis of the component 104. Successive protrusions 110 may extend in this plane and may be substantially parallel to one another.

The protrusions 110 may protrude with respect to the surface of the component 104. The protrusions 110 may be angled with respect to a local surface of the component 104. In the particular example shown, the protrusions 110 may be substantially perpendicular to the surface of the component 104. The protrusions 110 may be made from a silicone material, eg rubber, such as the proprietary Fastblock.

A barrier material 130 may be provided on the protrusions 110. The barrier material 130 may be arranged and configured to form a first protective layer 132 when activated by heat. In the particular example shown, the barrier material 130 may comprise an intumescent coating, eg paint, provided on the surfaces, eg sidewalls, of the protrusions 110. With reference to Figure 4, this intumescent paint swells during a fire event to fill the gaps between the protrusions 110. This forms a much thicker fire protection layer 132 than could be achieved with intumescent paint on the surface of the component alone, and with less mass and stiffness than a solid, continuous silicone rubber.

The protrusions 110 may not contribute to the stiffness of the component in a direction perpendicular to an elongate axis of the protrusions. Accordingly the protrusions 110 and the barrier material 130 may provide increased fire protection without increased stiffness of the component. As the protrusions do not need to flex they can be coated with intumescent paint without the paint being comprised, eg by flaking due to flexure.

Referring to Figures 3(a) and 3(c) the heat protection assembly 100 may, in addition to the protrusions 110, further comprise a second protective layer 120. The second protective layer 120 may substantially encapsulates the component 104. The protrusions 110 may extend beyond the outer perimeter of the second protective layer 120. The protrusions 110 may protrude from the second protective layer 120. The protrusions 110 may be integral with the second protective layer 120. As such, the second protective layer may also be made from a silicone material, rubber, such as the proprietary Fastblock. The inner layer 120 may provide fluid protection and sealing of the component 104, eg prior to the activation of the first protective layer, and may be sufficiently thin to allow flexing of the component without unacceptable strain. However, the second protective layer 120 may be omitted altogether, for example if the component 104 is sealed by its own design or if the first protective layer 132 is sufficient in itself.

In an alternative arrangement, the protrusions 110 may be separate components from the second protective layer 120. The protrusions 110 may also be made from a different material from the second protective layer 120. For example, since the protrusions 110, eg ribs, may not significantly flex, they may be made of a material stiffer than the second protective layer, which may also have other beneficial properties.

In a further alternative arrangement (not shown), the protrusions 110 may comprise discrete protrusions, eg pillars, which may protrude in localised regions relative to the surface of the component 104 and as such may not extend about the perimeter of the component 104.

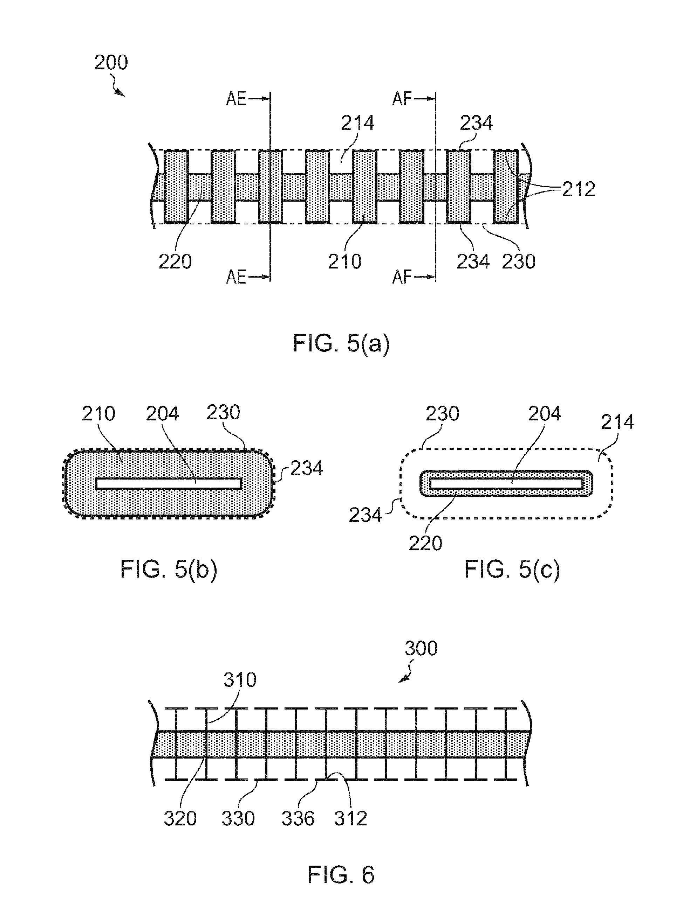

With reference to Figures 5(a) to (c), a heat protection assembly 200, according to a second example of the present disclosure, may comprise a plurality of protrusions 210 protruding with respect to and distributed about a surface of a component 204. Accordingly, the second example of the present disclosure is similar to the first example and features described with respect to the first example may also apply to the second. However, in contrast to the first example of the present disclosure, the second example comprises a barrier material 230 disposed on ends 212 of the protrusions 210. The barrier material 230 of the second example may be in addition to or instead of the barrier material 130 of the first example.

The barrier material 230 may comprise a membrane 234, eg a flexible membrane, disposed on ends of the protrusions 210. The ends 212 of the protrusions 210 may support the membrane 234. For example, the membrane 234 may rest on or be fixed to the ends 212 of the protrusions 210. The protrusions 210, eg ribs, may hold the membrane 234 away from the component 204, thereby maintaining an air gap 214 between the membrane 234 and the component 204.

The membrane 234 may be permeable or porous during normal use so that it does not retain fluid in between the protrusions 210. Furthermore, the membrane 234 may have compliance, eg flexibility, such that it does not limit the flexibility component, eg as much as a solid membrane might at the same distance from the neutral axis of the component.

The outer membrane 234 may be intumescent and/or it may fuse when exposed to intense heat such as a flame, thus forming the first protective layer. The membrane 234 may comprise holes therethrough, which are closed under the action of heat. Accordingly, the air in the cavities formed by the membrane, the component and the protrusions is trapped within the heat protection assembly 200. The air trapped within said cavities has limited ability to circulate so may offer some additional thermal insulation. The membrane 234 may comprise a Carbon-fibre weave.

As for the first example of the present disclosure, the second example may comprise an optional second protective layer 220 substantially encapsulating the component 204. The protrusions 210 may extend beyond the outer perimeter of the second protective layer 220 so that the second protective layer may be inside the first protective layer 232 formed by the barrier material 230. The inner layer 220 may provide fluid protection and sealing of the component 204, eg prior to the activation of the first protective layer, and may be sufficiently thin to allow flexing of the component without unacceptable strain.

Again, as for the first example of the present disclosure, the protrusions 210 may comprise discrete protrusions, eg pillars, which may protrude in localised regions relative to the surface of the component 204 and as such may not extend about the perimeter of the component 204.

With reference to Figure 6, a heat protection assembly 300, according to a third example of the present disclosure, may comprise a plurality of protrusions 310 protruding with respect to and distributed about a surface of a component 304. Accordingly, the third example of the present disclosure is similar to the first and second examples and features described with respect to the first and/or second examples may also apply to the third. However, in contrast to the first and second examples of the present disclosure, the third example comprises a barrier material 330 in the form of flange portions 336 disposed on ends 312 of the protrusions 310. The flange portions 336 of the third example may be in addition to or instead of the barrier materials 130, 230 of the first and/or second examples.

The flange portions 336 may be angled, eg perpendicular, to the protrusions 310. As such, the protrusions 310 and flange portions 336 may together define a "T" shaped section. The flange portions 336 may be made of an intumescing or fusing material such that during a fire the "T" section flanges come together, eg expand and/or fuse, to form the first protective layer 332 that is held at some distance from the component 304 and/or the inner protective layer 320. The flange portions 336 may be integral with the respective protrusions 310 or they may be discrete components.

The height, width and spacing of the "T" shaped sections may be varied to control the achievable bend radius of the combination of the component 304 and the protection assembly 300.

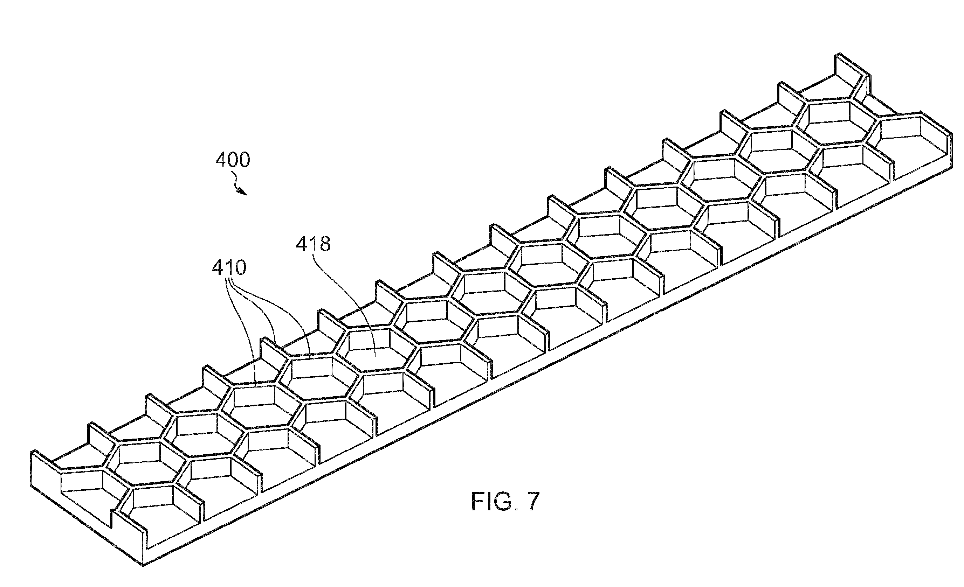

With reference to Figure 7, a heat protection assembly 400, according to a fourth example of the present disclosure, may comprise a plurality of protrusions 410 protruding with respect to and distributed about a surface of a component. Accordingly, the fourth example of the present disclosure is similar to the previous examples and features described with respect to the previous examples may also apply to the fourth. However, in contrast to the previous examples of the present disclosure, adjacent protrusions 410 of the fourth example may be joined together so as to form a lattice arrangement distributed about the surface of the component. In other words, the protrusions 410 may be arranged in a honeycomb or other lattice pattern, eg with tessellating cells 418 formed by protrusions 410. Such an arrangement may adjust or control the stiffness of the protection assembly 400.

As for the first example of the present disclosure, an intumescent coating may be applied to the sidewalls of the protrusions. However, due to the flexure of the protrusions in this example, an intumescent coating may not be desirable. Thus, alternatively or additionally, a membrane may be provided on ends of the protrusions in a manner similar to that described with reference to the second example.

In an alternative embodiment, instead of a barrier material being provided on the protrusions, the material of the protrusions comprises a barrier material. That is to say, the protrusions are manufactured from a barrier material having the same heat protective properties as for the other embodiments described herein. In this example the protrusions may be manufactured from a mineral fibre reinforced plastic which contains intumescing graphite particles. Alternatively they may be manufactured from PEEK, carbon or glass fibre reinforced plastics. In further examples the intumescing graphite particles may be manufactured from Vermiculite, Ammonium Polyphosphate or other forms of hydrated graphite.

Thanks to the provision of the protrusions, examples of the present invention may use a non-flexible intumescent coating in a flexible way. A thicker fire protection may also be achieved than could have been achieved with an intumescent coating alone. Furthermore, the present invention may use air-cavities for thermal insulation, but these may only be used during a fire event, thereby avoiding the problems associated with sealing, fluid retention, and pressurisation. Moreover, the present invention uses less material than the prior art and achieves an equivalent thickness of protection during a fire, without the associated problems of permanent cavities such as fluid retention, stiffness and crushing.

By providing the protruding protrusions, the present invention avoids having a continuous surface far from the component's neutral axis of bending, thereby allowing good flexibility during installation, fitting, normal use etc. The present invention only has a continuous membrane away from the neutral axis during or after a fire, when such flexibility may not be required.

The present invention may also be applied not non-flexible, eg rigid, components, for example to provide a heat protection system with sufficient protection but reduced weight. Furthermore, the present invention may be applied to any component and not just those within a gas turbine engine. For example, any component that requires heat, eg fire, protection may have the present invention applied to it. The present invention may be applied in technical fields such as defence, aerospace, automotive, rail, marine, civil engineering, power generation, petrochemical, chemical, biological, manufacturing, nuclear or any other field which requires heat protection of a component.

Components within a gas turbine may typically have to withstand continuous operating temperatures between -65 and +150°C and exposure to fluids such as Kerosene, Aviation Gasoline (AvGas), Natural Gas, hydraulic fluid, lubricating oils and greases etc. The heat protection assembly of the present invention may be adapted to operate in such environments. For example the materials for the protrusions, barrier material and/or second protective layer may be selected to withstand such an environment. Nevertheless, different materials may be selected to allow the assembly to operate in hotter or cooler environments or to withstand exposure to other chemicals encountered in different applications.

For hoses or pipes with a fluid passing therethrough, the fluid can act as a heat-sink. Nevertheless, the present invention may be applied in such applications to reduce the weight of the heat protection assembly or to eliminate any fluid retention problems associated with the existing protection assemblies.

## Claims

1. A heat protection assembly (100) for a component (104), the assembly comprising:
a plurality of protrusions (110) distributed about a surface of the component, each protrusion protruding with respect to the surface of the component to a respective end (212), the protrusions being spaced from one another in a first condition such that the assembly is flexible; and
the protrusions comprising a barrier material (130),
wherein the barrier material is constructed and arranged to form, in a second condition under the action of heat, a first protective layer (132), the first protective layer closing the space between at least the ends of the protrusions so as to protect the component from the heat.

2. The heat protection assembly of claim 1, wherein the barrier material is disposed on a surface of the protrusions.

3. The heat protection assembly of claim 1 or 2, wherein the barrier material comprises a material adapted to expand under action of heat so as to fill the space between adjacent protrusions and to form the first protective layer.

4. The heat protection assembly of any preceding claim, wherein the barrier material is disposed on the ends of the protrusions.

5. The heat protection assembly of claim 4, wherein the barrier material is provided as a membrane (234) disposed on the ends of the protrusions.

6. The heat protection assembly of claim 4 or 5, wherein the barrier material is provided as a permeable membrane (234) which is configured to fuse under the action of heat so as to become impermeable and form the first protective layer.

7. The heat protection assembly of any of claims 4 to 6, wherein the barrier material comprises a fibre weave.

8. The heat protection assembly of any preceding claim, wherein the barrier material comprises an intumescent material (130).

9. The heat protection assembly of any preceding claim, wherein the barrier material is provided as flange portions (336) arranged at ends of the protrusions (310), the flange portions being configured such that adjacent flange portions come together under the action of heat so as to form the first protective layer.

10. The heat protection assembly of claim 9, wherein the flange portions are integral with the respective protrusions.

11. The heat protection assembly of any preceding claim, wherein the plurality of protrusions are arranged so as to form a lattice arrangement (418) distributed about the surface of the component.

12. The heat protection assembly of any preceding claim, wherein the assembly further comprises a second protective layer (120), the second protective layer substantially encapsulating the component.

13. The heat protection assembly of claim 12, wherein the protrusions are integral with the second protective layer.

14. A gas turbine engine comprising the heat protection assembly of any of the preceding claims.

15. A method of protecting a component (104) from heat, the method comprising:
providing a heat protection assembly (100) comprising a plurality of protrusions (110) distributed about a surface of the component, each protrusion protruding with respect to the surface of the component to a respective end (212), the protrusions being spaced from one another in a first condition such that the assembly is flexible, the protrusions comprising a barrier material; and
forming, in a second condition under the action of heat, a first protective layer (132) from the barrier material, the first protective layer closing the space between at least the ends of the protrusions so as to protect the component from the heat.
